# EUROPÄISCHE PATENTSCHRIFT

(11) **EP 0 613 737 B1**
(45) Veröffentlichungstag und Bekanntmachung des Hinweises auf die Patenterteilung: **24.04.1996**
(21) Anmeldenummer: 94101371.6
(22) Anmeldetag: 31.01.1994
(51) Int. Cl.: B21B 13/14, B21B 37/00, F16C 13/00, D21G 1/02

(54) **Walzenanordnung mit einer Durchbiegungsausgleichswalze**
Roller arrangement with a controlled deflection roll
Agencement de cylindres avec rouleau à déflexion controlée

(30) Priorität: 22.02.1993 DE 4305371
(43) Veröffentlichungstag der Anmeldung: 07.09.1994
(73) Patentinhaber: Voith Sulzer Finishing GmbH, D-47803 Krefeld (DE)
(72) Erfinder: van Haag, Rolf, D-47918 Kerken (DE)
(74) Vertreter: Knoblauch, Ulrich, Dr.-Ing., Patentanwälte Dr. Knoblauch

(56) Entgegenhaltungen:
- EP-A- 0 241 442
- DE-A- 3 734 832
- DE-A- 4 042 365
- DE-C- 3 200 490
- DE-C- 3 644 170
- DE-U- 9 105 073

## Beschreibung

Die Erfindung bezieht sich auf eine Walzenanordnung mit einer Durchbiegungsausgleichswalze und einer einen Preßspalt mit ihr bildenden Gegenwalze.

Bei einer Durchbiegungsausgleichswalze, deren Mantel relativ zum Träger in der Wirkebene verschiebbar ist, insbesondere einer sogenannten selbstbelastenden Durchbiegungsausgleichswalze, bestehen Schwierigkeiten, eine der übrigen Preßbelastung entsprechende Randpressung zu erreichen, wenn diese mit einer Gegenwalze, die mit ihren Zapfen drehbar im Gestell gelagert ist, zusammenwirkt.

Bei einer bekannten Walzenanordnung der eingangs beschriebenen Art (DE-PS 36 44 170) besteht aufgrund der Kraftgeber, welche die Lagerringe belasten, die Möglichkeit, Kräfte auf die Mantelenden an Stellen wirken zu lassen, die sich noch außerhalb der Stützvorrichtung befinden. Hierdurch ergibt sich eine Verbesserung. Es bleiben aber noch Unvollkommenheiten in der Gleichmäßigkeit der Druckspannung im Preßspalt.

Aus DE 40 42 365 A1 ist eine Walzenanordnung mit einer Durchbiegungsausgleichswalze und einer einen Preßspalt mit ihr bildenden Gegenwalze bekannt. Die Durchbiegungsausgleichswalze weist einen Mantel auf, der mittels einer hydrostatischen Stützvorrichtung auf einem den Mantel durchsetzenden und an seinen beiden Enden drehfest gelagerten Träger abgestützt ist. Die Mantelenden sind je durch einen Momentgeber belastet, der durch Ausübung eines Drucks auf eine oder zwei am Mantelende befestigte Flansche ein Moment um eine zur Wirkebene senkrechte Achse erzeugt. Die Walzenmantelenden sind hierbei über Lager fest auf dem Träger abgestützt.

Wie EP 0 241 442 A2 zeigt, ist es bei einer Durchbiegungsausgleichswalze mit fest gelagertem Mantel auch üblich, an den Enden einen Drehmomentgeber vorzusehen, der durch radial verschiebbare Kolben belastbar ist.

Der DE 37 34 832 A1 ist eine Durchbiegungsausgleichswalze mit radial verschiebbarem Walzenmantel zu entnehmen, dessen Walzenenden je mit mehreren radial verschiebbaren Kolben belastbar sind, nämlich zwei paar Kolben zur Aufbringung von Radialkräften und ein paar Kolben zur Aufbringung eines Moments. Wird der dem Momentgeber zugeführte Druck geändert, führt dies nicht nur zu einer Änderung der Momentbelastung, sondern auch zu einer Änderung der Kraftbelastung. Dies macht eine Einstellung der von Moment und Kraft abhängigen Biegelinie schwierig.

Der Erfindung liegt die Aufgabe zugrunde, eine Walzenanordnung der eingangs beschriebenen Art anzugeben, mit der eine noch bessere Anpassung der Durchbiegung der Durchbiegungsausgleichswalze an die Durchbiegung der Gegenwalze möglich ist.

Diese Aufgabe wird erfindungsgemäß durch die Merkmale des Anspruchs 1 gelöst.

Bei einer Durchbiegungsausgleichswalze mit radial verschiebbarem Walzenmantel wird daher eine doppelte Kompensation, nämlich durch Kraftgeber und durch Momentgeber vorgesehen, um eine Anpassung an die Biegelinie der Gegenwalze zu erreichen. Die Durchbiegung der Gegenwalze hängt wesentlich vom Abstand der beiden Lager ab, in denen die Zapfen der Gegenwalze gelagert sind. Der Walzenmantel hat in aller Regel eine Länge, die geringer ist als dieser Abstand. Mit Hilfe der durch die Kraftgeber hervorgerufenen Kräfte und der mit Hilfe der Momentgeber hervorgerufenen Biegemomente kann man den Walzenmantel so belasten, als ob er Zapfen trüge, die in ähnlicher Weise gelagert sind wie die Zapfen der Gegenwalze. Insbesondere kann die Kompensation derart erfolgen, als ob der Lagerabstand der imaginären Zapfen etwa demjenigen der Gegenwalze entspricht. Dann ist die Durchbiegung des Walzenmantels derjenigen der Gegenwalze optimal angepaßt.

Da die Kraftgeber in Radialrichtung und die Momentgeber in Axialrichtung wirken, ist es möglich, Kraft und Moment unabhängig voneinander oder proportional einzustellen. Diese Proportionalität, die sich beispielsweise ergibt, wenn Kraftgeber und Momentgeber mit demselben Druck gespeist werden, trägt der Tatsache Rechnung, daß bei einer Änderung einer auf einen echten Zapfen wirkenden Lagerkraft die an einer beliebigen Stelle der zugehörigen Walze auftretende Biegekraft und das an der gleichen Stelle auftretende Biegemoment eine proportionale Änderung erfahren.

Als Momentgeber kommen bevorzugt Druckstück-Druckkammer-Einheiten in Betracht, die zu beiden Seiten eines Mittelflansches zwischen diesem und zwei Stützflanschen wirken, wobei der Mittelflansch am Träger und die Stützflansche an den Mantelenden oder umgekehrt befestigt sind. Auch diese Konstruktion ermöglicht eine raumsparende Unterbringung des Momentgebers.

In weiterer Ausgestaltung ist dafür gesorgt, daß die Steuervorrichtung die Kraft und das Moment in Abhängigkeit von der Breite der zu behandelnden Bahn einstellt.

Sodann ist es günstig, daß die Steuervorrichtung die Kraft und das Moment in Abhängigkeit von der mittleren Linienkraft im Preßspalt einstellt.

Zu den vorgenannten Zwecken kann die Steuervorrichtung einen Kennlinienspeicher aufweisen, der in Abhängigkeit von der gewählten mittleren Linienkraft und/oder der Breite der zu behandelnden Bahn sowohl den Stützelementen als auch dem Kraftgeber und dem Momentgeber vorbestimmte Drücke zuführt. Dies wird beispielsweise dadurch erreicht, daß für jede mittlere Linienkraft eine Schar von breitenabhängigen Kennlinien gespeichert ist bzw. die Drücke von einem Rechner entsprechend den Bahnbreiten und Linienkräften ermittelt werden. Daher ist von vornherein sichergestellt, daß sich eine gut an die Gegenwalze angepaßte Biegelinie ergibt.

Als Kraftgeber kommen alle bekannten Konstruktionen in Betracht, mit denen der Lagerring in Verschieberichtung belastet werden kann. Besonders bevorzugt ist eine Konstruktion, bei der die Kraftgeber zwischen Träger und Lagerring wirkende Kolben-Zylinder-Einheiten aufweisen, weil dies wenig Platz erfordert und die Kräfte unmittelbar dort erzeugt werden, wo sie in den Walzenmantel eingeleitet werden sollen.

Ein weiterer Vorteil besteht darin, daß man die Zylinder der Kraftgeber und die Druckkammern der Momentgeber über Druckmittelzuleitungen im Träger versorgen kann.

Bei einer bevorzugten Ausführungsform ist ein Kraftgeber auf der dem Preßspalt abgewandten Seite des Lagerringes vorgesehen. In vielen Fällen genügt es, nur diesen Kraftgeber anzuordnen, um die gewünschte Kompensation zu erzielen. Dies gilt insbesondere, wenn u.a. schmale, zwischen den Lagerringen verlaufende Bahnen behandelt werden sollen und/oder eine hohe Linienkraft vorhanden ist.

In anderen Fällen empfiehlt es sich, einen Kraftgeber auf der dem Preßspalt zugewandten Seite des Lagerringes vorzusehen. Dies gilt insbesondere bei der Behandlung von u.a. breiten, die Lagerringe übergreifenden Bahnen und/oder bei geringeren Linienkräften. Ein so angeordneter Kraftgeber erzeugt nämlich eine Preßkraft ähnlich wie die Elemente der Stützvorrichtung, so daß man ihn in einigen Fällen mit benachhbarten Stützelementen über eine gemeinsame Zuleitung mit Druckmittel versorgen kann, er kann aber durch entsprechende Korrektur auch die Kompensationskraft berücksichtigen.

Die Erfindung wird nachstehend anhand in der Zeichnung dargestellter bevorzugter Ausführungsbeispiele näher erläutert. Es zeigen:
- Fig. 1: eine schematische Darstellung der erfindungsgemäßen Walzenanordnung,
- Fig. 2: einen Längsschnitt durch das rechte Ende der Durchbiegungsausgleichswalze,
- Fig. 3: einen Querschnitt längs der Linie A-B in Fig. 2,
- Fig. 4: einen Längsschnitt durch das rechte Ende einer abgewandelten Form einer erfindungsgemäßen Walzenanordnung,
- Fig. 5: in einem Diagramm die Druckspannung Q im Preßspalt über der Walzenbreite W,
- Fig. 6: einen Längsschnitt ähnlich Fig. 2 durch eine abgewandelte Ausführungsform bei der Behandlung schmaler Bahnen und
- Fig. 7: das gleiche Ausführungsbeispiel bei der Behandlung breiter Bahnen.

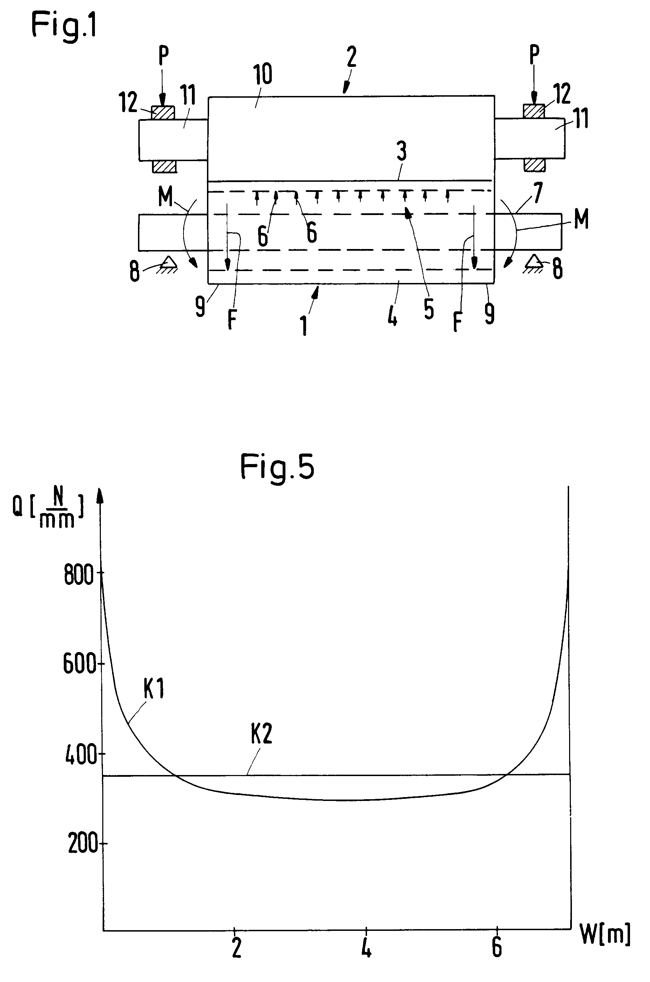

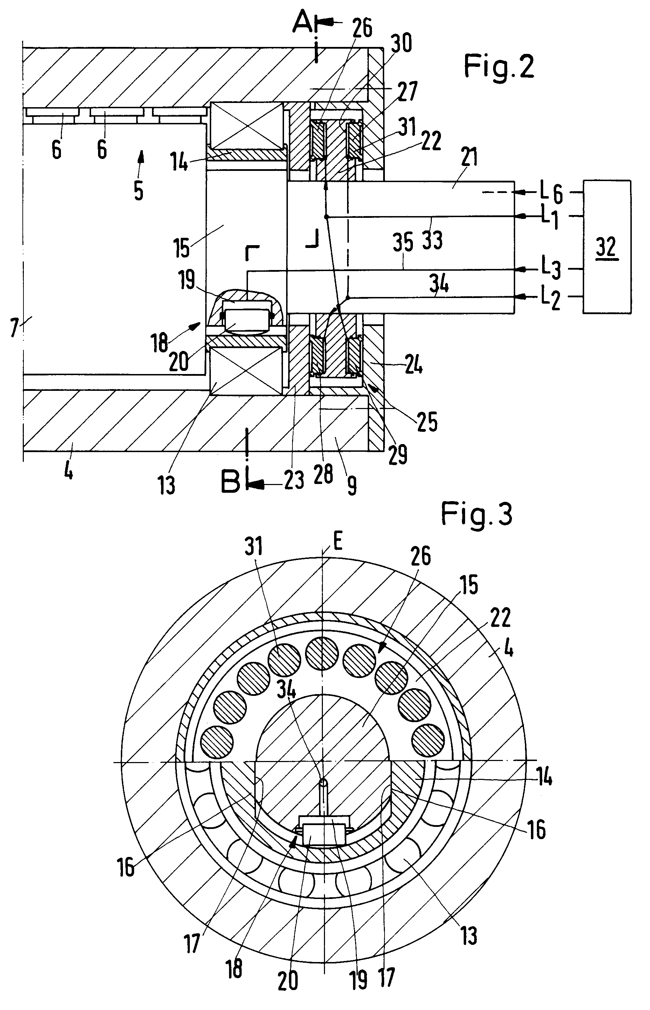

Fig. 1 zeigt eine Walzenanordnung mit einer Durchbiegungsausgleichswalze 1 und einer Gegenwalze 2, die zwischen sich einen Walzenspalt 3 bilden. Die Durchbiegungsausgleichwalze weist einen Mantel 4 auf, der mittels einer hydrostatischen Stützvorrichtung 5, dargestellt durch eine Reihe von hydrostatischen Stützelementen 6, auf einem Träger 7 abgestützt ist. Der Träger durchsetzt den Mantel und ist an beiden Enden drehfest auf Lagern 8 abgestützt. Der Mantel 4 ist relativ zum Träger 7 radial verschiebbar geführt. Er läßt sich daher in der Wirkebene E verschieben, welche durch die Achsen der Gegenwalze 2 und des Trägers 7 und damit auch durch den Preßspalt 3 hindurchgeht. Zusätzlich sind die Mantelenden 9 durch in der Wirkebene verlaufende Kräfte F und durch Momente M, deren Achse senkrecht zur Wirkebene stehen, belastbar. Einzelheiten sind in den Fig. 2 bis 4 beschrieben.

Die Gegenwalze 2 besitzt einen Walzenkörper 10 und zwei Zapfen 11, mit denen sie in Lagern 12 drehbar gelagert ist. Die Lager 12 sind in der Wirkebene verstellbar und durch eine Kraft P belastbar.

Bei dem Ausführungsbeispiel nach den Fig. 2 und 3 besteht die hydraulische Stützvorrichtung 5 aus hydrostatischen Stützelementen 6 in der Form von hydrostatischen Druckschuhen, die durch ein Druckmittel gegen den Innenumfang des Walzenmantels 4 gepreßt werden. Das Walzenende 9 ist über ein Wälzlager 13 auf einem Lagerring 14 gelagert, der in bekannter Weise auf einem Abschnitt 15 des Trägers 7 radial in der Wirkebene E verschiebbar ist. Zu diesem Zweck besitzt der Lagerring 14 zwei parallele Führungsflächen 16, die mit entsprechenden Gegenflächen 17 am Abschnitt 15 des Trägers 7 zusammenwirken. Statt dieser Führung kann auch eine exzentrische Schwenklagerung vorgesehen sein, wie dies DE-OS 36 32 906 zeigt, oder irgendeine andere bekannte Führung.

Zur Erzeugung der Kraft F ist auf der dem Preßspalt abgewandten Seite des Abschnitts 15 ein hydraulischer Kraftgeber 18 vorgesehen, der einen Zylinder 19 im Abschnitt 15 und einen Kolben 20, der auf den Lagerring 14 wirkt, aufweist.

An den Abschnitt 15 des Trägers 7 schließt ein Zapfen 21 kleineren Durchmessers an. Auf ihn ist ein Mittelflansch 22 aufgesetzt, der zwischen zwei am Mantel 4 befestigten Stützflanschen 23 und 24 angeordnet ist. Als Momentgeber 25 dienen vier Sätze 26, 27, 28, 29 von Einheiten, welche je aus einer Druckkammer 30 und einem Druckstück 31 bestehen. Das Druckstück kann als hydrostatischer Gleitschuh ausgebildet sein. Jeder dieser Sätze weist in diesem Ausführungsbeispiel auf einem Halbkreis angeordnete zylindrische Druckstücke in zylindrischen Druckkammern auf. Die Einheiten können aber auch eine andere Form haben, beispielsweise aus einem halbringförmigen Druckstück bestehen, das in einer halbringförmigen Nut untergebracht ist, wie dies DE-OS 40 42 365 zeigt.

Eine Steuervorrichtung 32 dient dazu, Druckmittel mit dem für den Betrieb geeigneten Druck für die einzelnen hydraulischen Vorrichtungen bereitzustellen. Die Druckkammern 30 der Einheiten der Sätze 26 und 29 werden über einen Anschluß L1 und eine Druckmittelzuleitung 33 im Zapfen 21 mit Druckflüssigkeit versorgt, die Druckkammern 30 der Sätze 27 und 28 über einen Anschluß L2 und eine Druckmittelzuleitung 34. Der Zylinder 19 des Kraftgebers 18 wird über einen Anschluß L3 und eine Druckmittelzuleitung 35 im Zapfen mit Druckflüssigkeit versorgt. Weitere Anschlüsse L6 dienen dazu, die Stützelemente 6 mit Druckflüssigkeit zu versorgen. Zur Erzielung der Kraft F und des Moments M, wie es in Fig. 1 dargestellt ist, müssen der Kraftgeber 18 und die Einheiten der Sätze 27 und 28 des Momentgebers 25 mit Druckflüssigkeit beaufschlagt werden.

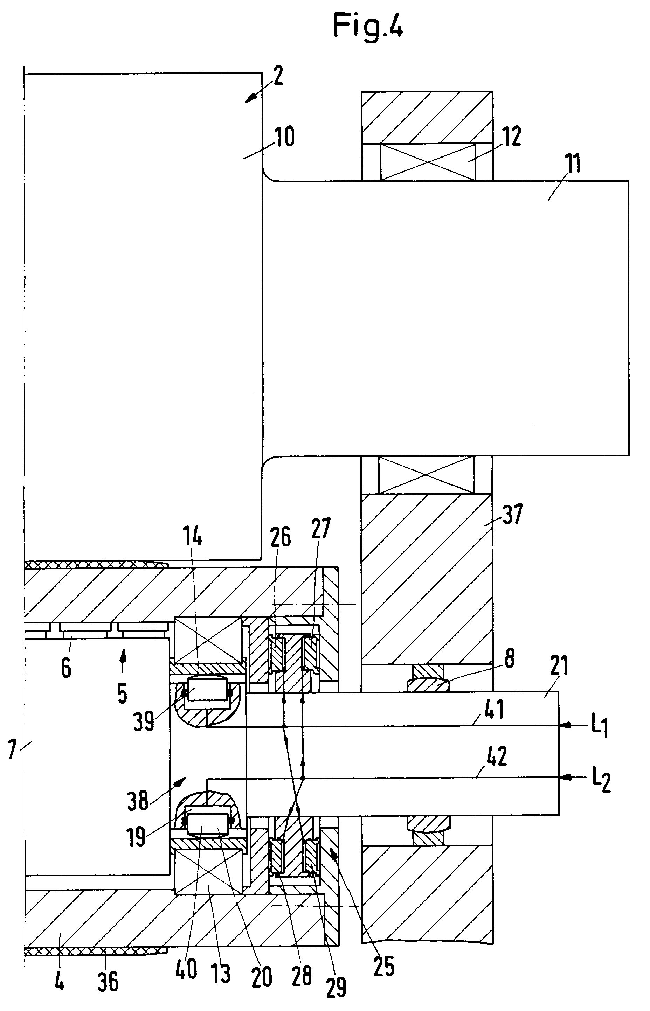

Bei der Ausführungsform nach Fig. 4 ist veranschaulicht, daß der Mantel 4 einen elastischen Bezug 36 trägt und mit der Gegenwalze zusammenwirkt. Hierbei ist das Lager 12 für den Zapfen 11 der Gegenwalze 2 fest im Maschinenständer 37 montiert. Auch das als sphärisches Lager ausgebildete Lager 8 für den Zapfen 21 des Trägers 7 ist fest im Maschinenständer 37 gehalten. Daher ist die hydraulische Stützvorrichtung 5 mit den Stützelementen 6 die einzige Quelle der Belastung des Walzenpaares, weshalb sie auch als "selbstbelastende" Durchbiegungsausgleichswalze bezeichnet wird. Der Kraftgeber 38 besteht hier aus zwei einander gegenüberliegenden Einheiten 39 und 40, die je aus einem Zylinder 19 und einem Kolben 20 bestehen. Der Aufbau des Momentgebers 25 entspricht demjenigen der Fig. 2 und 3. Hierbei sind die Einheiten der Sätze 27 und 28 der unteren Einheit 40 des Kraftgebers und die Einheiten der Sätze 26 und 29 der oberen Einheit 39 des Kraftgebers zugeordnet.

Besonders beachtenswert ist, daß man mit zwei Anschlüssen L1 und L2 auskommt. Man kann nämlich den Zylinder 19 der Einheit 39 unmittelbar mit der Druckmittelzuleitung 41 verbinden, die zu den Druckkammern der Sätze 26 und 29 führt, und die Druckkammer 19 der Einheit 40 mit der Druckmittelzuleitung 42, die zu den Druckkammern der Sätze 27 und 28 führt. Je nach den Betriebsbedingungen wird lediglich über die einen der Anschlüssen L1 oder L2 Druck zugeführt.

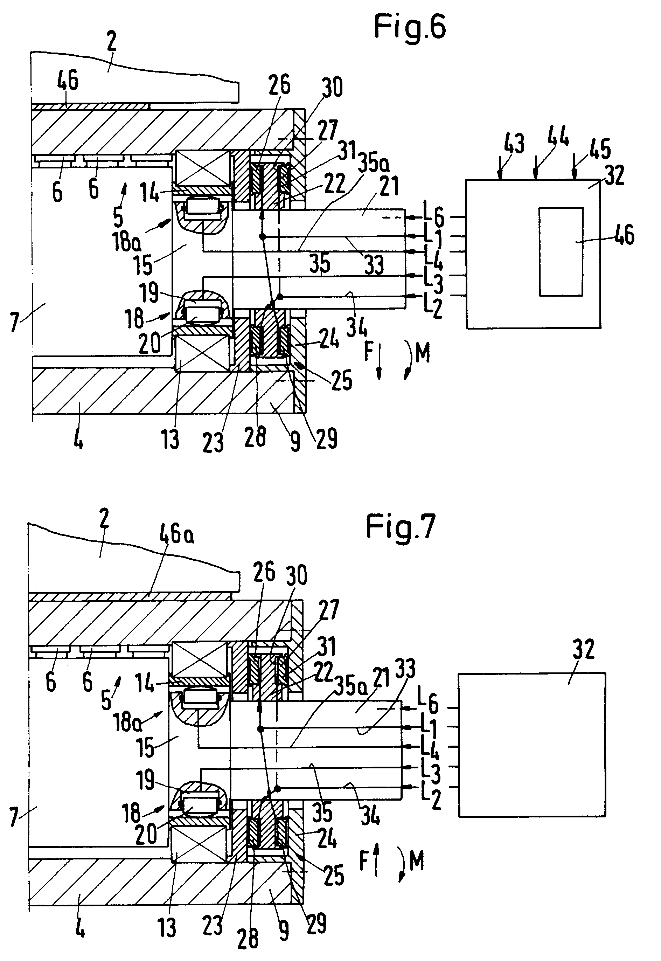

Fig. 5 zeigt die Verteilung der Druckspannung Q über der Breite W der Durchbiegungsausgleichswalze 1. Untersucht wurde ein zweiwalziger Softkalander mit einer Arbeitsbreite von 7,27 m. Die Durchbiegungsausgleichswalze arbeitete im Gegensatz zu den Ausführungsbeispielen als Oberwalze. Der Außendurchmesser des Walzenmantels betrug 87,3 cm, der Innendurchmesser 71,5 cm. Die als Heizwalze ausgebildete Unterwalze hatte einen Außendurchmesser von 1,35 m. Der Lagerabstand a betrug 8,92 m. Gewünscht wurde eine Streckenlastverteilung von durchschnittlich 350 N/mm. Hierfür wurden verschiedene Berechnungen durchgeführt. Zum Vergleich sind in Fig. 5 eingetragen:
- Kurve K1, die sich ergibt, wenn alle Zonen, dargestellt durch die Stützelemente 6 mit gleichem hydraulischen Druck beaufschlagt werden, ohne daß Kraftgeber und Momentgeber wirksam sind. Hier steigt die Streckenlast zu den Enden der Walze hin außerordentlich stark an. Es ergibt sich eine hohe Kantenpressung. Der hydraulische Druck betrug durchgehend 51,9 bar.
- Kurve K2, die zeigt, wenn Kraftgeber 18 und Momentgeber 25 voll wirksam sind. Hierbei betrug der den Stützelementen 6 zuzuführende Druck durchgehend 56,2 bar. Die Kraft F betrug 101,7 kN. Das Moment M war gleich 114,5 kNm, was mit einem Druck von ca. 60 bar erreicht werden konnte. Es ergibt sich eine nahezu gleichmäßige Streckenlastverteilung über die Walzenbreite. Dies wird erreicht, ohne daß die Lagerringe 14 oder die Stützflansche 23, 24 übermäßig belastet werden.

Die Fig. 6 und 7 unterscheiden sich von Fig. 2 dadurch, daß ein zweiter Kraftgeber 18a vorhanden ist, der auf der dem Preßspalt 3 zugewandten Seite des Lagerringes 14 vorgesehen ist und daher das Walzenmantelende in Preßrichtung zu belasten vermag. Dieser Kraftgeber 18a ist über eine Druckmittelzuleitung 35a mit einem zusätzlichen Anschluß L4 an der Steuervorrichtung 32 angeschlossen. Die Steuervorrichtung 32 besitzt einen ersten Eingang 43, über den die gewünschte mittlere Linienkraft eingestellt werden kann, einen Eingang 44, mit dem die Druckverteilung im Preßspalt eingestellt werden kann, und einen Eingang 45, mit dem die Breite der zu behandelnden Bahn 46 eingegeben werden kann. Diese Eingaben können von Hand oder automatisch aufgrund von Messungen oder auf andere Weise erfolgen. Die Steuervorrichtung 32 besitzt einen Kennlinienspeicher 46, in welchem Scharen von Kennlinien abgelegt sind, welche die mittlere Linienkraft, die Breite der Warenbahn und gegebenenfalls das Linienkraftprofil berücksichtigen. Derartige Kennlinien sind für den Stützelementen 6 zuzuführenden Drücke bekannt, beispielsweise aus DE-PS 32 00 490. Ähnliche Kennlinien gelten für die dem Momentgeber 25 und dem Kraftgeber 18 bzw. 18a zuzuführenden Drücke. Stattdessen kann die Steuervorrichtung 32 auch ein Rechner sein, der die aufzubringenden Drücke aufgrund von Bahnbreite, Linienkraft und Linienkraftprofil errechnet.

Gemäß Fig. 6 wird eine schmale Bahn 46 behandelt, die völlig im Bereich der Stützvorrichtung 5, also zwischen den Lagerringen 14 angeordnet ist. Hier wird Druck auf die Druckmittelzuleitungen 34 und 35 gegeben, mit dem Ergebnis, daß auf das rechte Ende des Walzenmantels 4 ein im Uhrzeigersinn wirkendes Moment M und vom Kraftgeber 18 eine entgegen der Preßrichtung wirkende Kraft F ausgeübt wird, wie dies durch schematische Pfeile angedeutet ist.

Wird dagegen eine breite Bahn 46a behandelt, wie dies in Fig. 7 gezeigt ist, wird Druck über die Druckmittelzuleitungen 34 und 35a zugeführt. Unter Beibehaltung des im Uhrzeigersinn wirkendes Moment M erzeugt der Kraftgeber 18a eine in Preßrichtung wirkende Kraft F. Diese hat eine ähnliche Wirkung wie die Stützkräfte der Stützelemente 6, kann aber durch entsprechende Verkleinerung auch die zur Kompensation erforderliche Gegenkraft berücksichtigen.

Von den dargestellten Ausführungsformen kann in vielfacher Hinsicht abgewichen werden, ohne den Grundgedanken der Erfindung zu verlassen. Beispielsweise kann die Walzenanordnung auch aus mehr als zwei Walzen bestehen. Statt der einzelnen Stützelemente 6 kann die Stützvorrichtung 5 auch aus Druckkammern bestehen, die sich über einen Teil des Umfangs des Walzenmantels zwischen diesem und dem Träger erstrecken und mit Druckflüssigkeit gefüllt sind. In manchen Fällen ist es auch zweckmäßig, auf der dem Preßspalt gegenüberliegenden Seite des Trägers 7 zusätzliche Stützelemente vorzusehen.

## Patentansprüche

1. Walzenanordnung mit einer Durchbiegungsausgleichswalze (1) und einer einen Preßspalt (3) mit ihr bildenden Gegenwalze (2), wobei in Kombination vorgesehen ist:
a) die Durchbiegungsausgleichswalze (1) weist einen radial verschiebbaren Mantel (4) auf, der mittels einer hydrostatischen Stützvorrichtung (5) auf einem den Mantel durchsetzenden und an seinen beiden Enden drehfest gelagerten Träger (7) abgestützt ist und dessen Mantelenden (9) je auf einem Lagerring (14) gelagert sind, der in der Wirkebene radial verschiebbar geführt ist,
b) der Lagerring (14) ist in Verschieberichtung durch Kraftgeber (18, 18a; 38) belastbar,
c) die Mantelenden (9) sind je durch einen Momentgeber (25) belastbar, der **durch Ausübung eines Drucks auf einen oder zwei am Mantelende befestigte Flansche (23, 24)** ein Moment (M) um eine zur Wirkebene (E) senkrechte Achse erzeugt, und
d) eine Steuervorrichtung (32) ist zur **unabhängigen oder proportionalen** Einstellung der resultierenden Kraft (F) der Kraftgeber (18, 18a; 38) und des resultierenden Moments (M) der Momentgeber (25) an jedem Mantelende (9) vorgesehen.

2. Walzenanordnung nach Anspruch 1, dadurch gekennzeichnet, daß die Steuervorrichtung (32) die Kraft (F) und das Moment (M) in Abhängigkeit von der Breite der zu behandelnden Bahn einstellt.

3. Walzenanordnung nach einem der Ansprüche 1 oder 2, dadurch gekennzeichnet, daß die Steuervorrichtung (32) die Kraft (F) und das Moment (M) in Abhängigkeit von der mittleren Linienkraft im Preßspalt (3) einstellt.

4. Walzenanordnung nach einem der Ansprüche 1 bis 3, dadurch gekennzeichnet, daß die Kraftgeber (18, 18a; 38) zwischen Träger (7) und Lagerring (14) wirkende Kolben-Zylinder-Einheiten aufweisen.

5. Walzenanordnung nach einem der Ansprüche 1 bis 4, dadurch gekennzeichnet, daß Zylinder und Druckkammern durch Druckmittelzuleitungen (33 - 35; 35a; 41, 42) im Träger versorgt sind.

6. Walzenanordnung nach einem der Ansprüche 1 bis 5, dadurch gekennzeichnet, daß ein Kraftgeber (18) auf der dem Preßspalt (3) abgewandten Seite des Lagerringes (14) vorgesehen ist.

7. Walzenanordnung nach einem der Ansprüche 1 bis 6, dadurch gekennzeichnet, daß ein Kraftgeber (18a) auf der dem Preßspalt (3) zugewandten Seite des Lagerringes (14) vorgesehen ist.

## Claims

1. Roller assembly with a deflection-equalising roller (1) and a counter roller (2) forming with it a pressing gap (3), wherein in combination there is provided:
a) the deflection-equalising roller (1) comprises a radially displaceable sleeve (4) which by means of a hydrostatic supporting device (5) is supported on a support (7) which passes through the sleeve and is mounted non-rotatably at both its ends and of which the sleeve ends (9) are each mounted on a bearing ring (14) which is guided radially displaceably in the working plane,
b) the bearing ring (14) can be loaded by force generators (18, 18a; 38) in the direction of displacement,
c) the sleeve ends (9) can each be loaded by a torque generator (25) which, by exerting a pressure on one or two flanges (23, 24) attached to the sleeve end, generates a torque (M) about an axis perpendicular to the working plane (E), and
d) a control device (32) is provided at each sleeve end (9) for independently or proportionally adjusting the resulting force (F) of the force generators (18, 18a; 38) and the resulting torque (M) of the torque generators (25).

2. Roller assembly according to claim 1, characterised in that the control device (32) adjusts the force (F) and the torque (M) as a function of the width of the web to be treated.

3. Roller assembly according to either of claims 1 or 2, characterised in that the control device (32) adjusts the force (F) and the torque (M) as a function of the mean line force in the pressing gap (3).

4. Roller assembly according to any of claims 1 to 3, characterised in that the force generators (18, 18a; 38) comprise piston and cylinder units which act between support (7) and bearing ring (14).

5. Roller assembly according to any of claims 1 to 4, characterised in that cylinder and pressure chambers are supplied via fluid supply pipes (33-35; 35a; 41, 42) in the support.

6. Roller assembly according to any of claims 1 to 5, characterised in that a force generator (18) is provided on the side of the bearing ring (14) facing away from the pressing gap (3).

7. Roller assembly according to any of claims 1 to 6, characterised in that a force generator (18a) is provided on the side of the bearing ring (14) facing towards the pressing gap (3).

## Revendications

1. Agencement de cylindres comprenant un cylindre de compensation de flexion (1) et un cylindre conjugué (2) formant avec le précédent, un interstice de compression (3), les caractéristiques suivantes étant prévues en combinaison:
a) le cylindre de compensation de flexion (1) comporte une enveloppe (4) susceptible d'être déplacée radialement, qui s'appuie, au moyen d'un dispositif d'appui hydrostatique (5), sur un support (7) traversant l'enveloppe et monté de manière fixe en rotation à ses deux extrémités, et dont les extrémités d'enveloppe (9) sont montées chacune sur un anneau de palier (14) guidé de manière radialement déplaçable dans le plan d'action,
b) l'anneau de palier (14) peut être sollicité dans la direction de déplacement, par des transmetteurs de force (18, 18a; 38),
c) les extrémités d'enveloppe (9) peuvent être sollicitées chacune par un transmetteur de moment (25), qui **en exerçant une pression sur un ou deux flasques (23, 24) fixés à l'extrémité d'enveloppe**, engendre un moment (M) autour d'un axe perpendiculaire au plan d'action (E), et
d) un dispositif de commande (32) est prévu pour le réglage **indépendant ou proportionnel** de la force résultante (F) des transmetteurs de force (18, 18a; 38) et du moment résultant (M) des transmetteurs de moment (25), à chaque extrémité d'enveloppe (9).

2. Agencement de cylindres selon la revendication 1, caractérisé en ce que le dispositif de commande (32) règle la force (F) et le moment (M) en fonction de la largeur de la nappe à traiter.

3. Agencement de cylindres selon l'une des revendications 1 ou 2, caractérisé en ce que le dispositif de commande (32) règle la force (F) et le moment (M) en fonction de la charge linéaire moyenne dans l'interstice de compression (3).

4. Agencement de cylindres selon l'une des revendications 1 à 3, caractérisé en ce que les transmetteurs de force (18, 18a; 38) présentent des unités à piston-cylindre agissant entre le support (7) et l'anneau de palier (14).

5. Agencement de cylindres selon l'une des revendications 1 à 4, caractérisé en ce que les cylindres et les chambres de pression sont alimentées par des conduites d'alimentation de fluide de pression (33 - 35; 35a; 41, 42) dans le support.

6. Agencement de cylindres selon l'une des revendications 1 à 5, caractérisé en ce qu'un transmetteur de force (18) est prévu sur le côté de l'anneau de palier (14) opposé à celui dirigé vers l'interstice de compression (3).

7. Agencement de cylindres selon l'une des revendications 1 à 6, caractérisé en ce qu'un transmetteur de force (18a) est prévu sur le côté de l'anneau de palier (18), dirigé vers l'interstice de compression (3).
